# EUROPEAN PATENT APPLICATION

(11) **EP 3 620 821 A1**
(43) Date of publication of application: **11.03.2020**
(21) Application number: 18192757.5
(22) Date of filing: 05.09.2018
(51) Int. Cl.: G01S 17/36, G01S 17/58, G01S 17/89, G06T 5/00, H04N 5/357

(54) **TIME OF FLIGHT CAMERA AND METHOD FOR CALIBRATING A TIME OF FLIGHT CAMERA**

(71) Applicant: Infineon Technologies AG, 85579 Neubiberg (DE)
(72) Inventor: BESHINSKI, Krum, 8010 Graz (AT); DIELACHER, Markus, 8046 Graz (AT)
(74) Representative: 2SPL Patentanwälte PartG mbB

(57) **Abstract**

Embodiments of the present disclosure relate to a concept for calibrating a Time of Flight, ToF, camera (20). At least one ToF image of a target (24) located at one or more predetermined distances from the ToF camera is taken (12). The at least one ToF image is lowpass-filtered (14) to generate a filtered ToF image. The filtered ToF image is subtracted (16) from the ToF image to generate a fixed pattern phase noise, FPPN, image

## Description

### Field

Embodiments of the present disclosure generally relate to time-of-flight cameras (ToF cameras) and, more particularly, to methods and apparatuses for calibrating ToF cameras.

### Background

A ToF camera is a range imaging camera system that can resolve distance based on the known speed of light. It can measure the time-of-flight of a light signal between the camera and an object for each point of the image. A time-of-flight camera typically comprises an illumination unit to illuminate the object. For RF-modulated light sources, such as LEDs or laser diodes, the light can be modulated with high speeds up to and above 100 MHz,. For direct ToF imagers, a single pulse per frame (e.g. 30Hz) can be used. The illumination normally uses infrared light to make the illumination unobtrusive. A lens can gather the reflected light and images the environment onto an image sensor. An optical band-pass filter can pass the light with the same wavelength as the illumination unit. This can help to suppress non-pertinent light and reduce noise. Each pixel of the image sensor can measure the time the light has taken to travel from the illumination unit to the object and back to the focal plane array. Both the illumination unit and the image sensor have to be controlled by high speed signals and synchronized. These signals have to be very accurate to obtain a high resolution. The distance can be calculated directly in the camera.

In order to achieve optimum accuracy, ToF measurements require calibration and compensation of various systematic errors inherent to the system. Two main systematic errors are Fixed Pattern Phase Noise (FPPN) and wiggling. FPPN is a per pixel frequency dependent distance offset. FPPN might not only be based on the pixel itself, but also on its position on the chip due to the differing signal path to each pixel. Wiggling is a frequency and distance dependent distance error altering the measured distance by shifting the distance information significantly towards or away from the camera depending on the surface's true distance. Wiggling occurs due to imperfect generation of the modulated light which is sent out into the scene. Typically, a sinusoidal shape of the emitted light is assumed when computing the distance image. The deviations from the ideal sinusoidal shape lead to a periodically oscillating distance error. Since the errors are systematic, they can be calibrated and compensated for and it is necessary to separate them from each other during the calibration procedure. Conventional calibration methods have the limitation that both the wiggling and the FPPN errors are combined and they must be separated.

Thus, there is a desire to improve the calibration of ToF cameras.

### Summary

This desire is met by methods and apparatuses in accordance with the independent claims. Further potentially advantageous embodiments are subject of the dependent claims and/or the following description.

According to a first aspect of the present disclosure it is provided a method for calibrating a ToF camera. The method includes taking at least one ToF image of a target at one or more predetermined distances from the ToF camera. The at least one ToF image is lowpass-filtered to generate a filtered ToF image. The filtered ToF image is subtracted from the ToF image to generate an FPPN image. This concept allows for separation of FPPN and wiggling by (digital) filtering which can be implemented in software, for example.

In the context of the present disclosure, a ToF image refers to a depth map of a captured scene or target, which can be generated out of at least two (typically four) individual phase images, for example, in a known manner.

In some embodiments, the method further includes correcting ToF images taken with the ToF camera using the FPPN image. This correction can reduce the systematic FPPN error and can further improve the quality of the ToF images.

In some embodiments, the method includes taking a first ToF image of the target at the predetermined or known distance, taking at least a second ToF image of the target at the predetermined distance, determining an average of the first and at least the second ToF image to generate an average ToF image, and lowpass-filtering the average ToF image to generate the filtered ToF image. This optional implementation using an average of multiple ToF images can further reduce undesired effects of thermal noise.

In some embodiments, the at least one (average) ToF image is filtered with a digital lowpass filter having a kernel size equal or substantially equal to a size of the at least one ToF image. This optional implementation addressing the kernel size can improve the separation of the thermal noise and the FPPN.

In some embodiments, the at least one ToF image is lowpass-filtered with a digital Gaussian lowpass-filter. Such digital lowpass-filters provide good results, are well accessible, and freely available.

In some embodiments, the method includes selecting a first modulation frequency for the ToF camera's light source. At least one first ToF image of the target at the predetermined distance is taken by using the first modulation frequency. The at least one first ToF image is lowpass-filtered to generate a first filtered ToF image. The filtered first ToF image is subtracted from the first ToF image to generate a first FPPN image. Then a second modulation frequency is selected. At least one second ToF image of the target at the predetermined distance is taken by using the second modulation frequency. The at least one second ToF image is lowpass-filtered to generate a second filtered ToF image. The second filtered ToF image is subtracted from the second ToF image to generate a second FPPN image. Thus, respective calibrated FPPN images can be obtained for every available modulation frequency of the ToF camera.

In some embodiments, the method further includes correcting ToF images taken with the first modulation frequency using the first FPPN image, and correcting ToF images taken with the second modulation frequency using the second FPPN image. This correction can further improve the quality of the ToF images taken with the respective modulation frequencies.

In some embodiments, the method further includes (mechanically) fixing the ToF camera with its optical axis being orthogonal to a surface of the target. By fixing the ToF camera, better calibration results can be obtained.

According to a second aspect of the present disclosure it is provided a computer program for performing the method of any one of the aforementioned embodiments, when the computer program is executed on a programmable hardware device. As mentioned above, the proposed solution can be implemented by digital filtering in software to separate the two error sources.

According to yet a further aspect of the present disclosure it is provided a ToF camera, comprising a lowpass-filter configured to filter a ToF image of a target at predetermined distance from the ToF camera to generate a filtered ToF image, and a processor configured to subtract the filtered ToF image from the ToF image to generate a FPPN image, and to correct ToF images taken with the ToF camera using the FPPN image.

In some embodiments, the processor is configured to determine an average of a first and a second ToF image of the target to generate an average ToF image, and wherein the lowpass-filter is configured to filter the average ToF image to generate the filtered ToF image.

In some embodiments, the lowpass-filter is a digital lowpass-filter having a kernel size corresponding to a pixel resolution of the ToF image.

### Brief description of the Figures

Some examples of apparatuses and/or methods will be described in the following by way of example only, and with reference to the accompanying figures, in which
- Fig. 1: shows a flowchart of a calibration process for ToF cameras according to an embodiment of the present disclosure;
- Fig. 2: shows schematic block diagram of a ToF camera according to an embodiment of the present disclosure; and
- Fig. 3: shows measurement results during and after ToF calibration.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

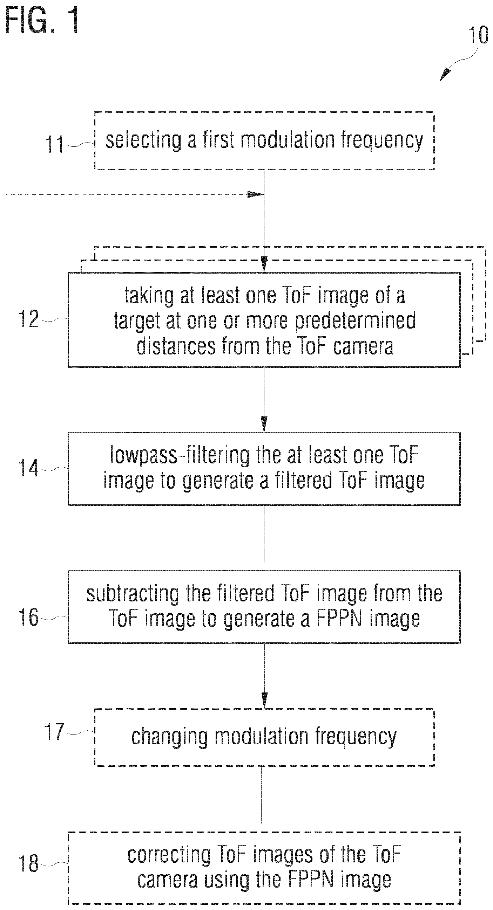

**Fig. 1** show a flowchart of a ToF calibration process 10 according to an embodiment. Dashed boxes can be regarded as optional variations or supplements of the ToF calibration process 10.

At 12, the calibration process 10 includes taking at least one ToF image of a target located at one or more predetermined distances from the ToF camera. At 14, the at least one ToF image is lowpass-filtered to generate a filtered ToF image. At 16, the filtered ToF image is subtracted from the ToF image to generate an FPPN image.

Not necessarily but preferably the captured target is a flat target, such as a flat wall or a flat sheet of paper, for example. When looking at a flat target instead of into a sphere, each pixel of the ToF camera's image sensor "sees" a different distance, but the variation of this distance is a low frequency component, which can preserved by an adequate digital lowpass-filter. In some embodiments, the target can have a surface with homogenous reflectivity. For example, the target can be white.

Since we want to calibrate the FPPN being a per pixel frequency dependent distance offset, the target is preferably located at a known distance from the ToF camera. The known distance allows conclusions about the pixel dependent distance offset, i.e., the FPPN. While using only one predetermined distance between the ToF camera and the target is sufficient in some embodiments, using multiple different known distances might be beneficial for other implementations. Knowing the exact distance is not necessary for extracting the FPPN only, since the FPPN can be derived by subtracting the filtered and non-filterd image.

The at least one ToF image taken for calibration purposes at 12 can be lowpass-filtered at 14 using a digital lowpass-filter in order to remove high frequency components from the ToF image. The skilled person having benefit from the present disclosure will appreciate that there a various feasible implementations of digital lowpass-filters. One example is a digital Gaussian filter. A standard Gaussian filter can be obtained from the Open Source Computer Vision Library standard library, for example. In some embodiments, the kernel size of the digital lowpass-filter can be chosen to be large and equal in size to the size (pixel resolution) of the ToF image.

The lowpass-filtered ToF image is then subtracted from the ToF image at 16 to generate the FPPN image which is indicative of the pixel dependent distance offset, the FPPN. This FPPN image or information can then be stored and used as a baseline for calibrating wiggling errors and/or for correcting ToF images taken under normal operation of the ToF camera.

If higher calibration accuracy is desired, multiple ToF images of the same target can be taken during the calibration procedure. This is indicated in Fig. 1 by the further dashed boxes at 12. That is to say, the act 12 of taking at least one ToF image can include taking a first ToF image of the target at the predetermined distance and taking at least a subsequent second ToF image of the same target at the same predetermined distance. The skilled person having benefit from the present disclosure will appreciate that more than two ToF images of the target can be taken during calibration. In case of multiple images, an average ToF image of the first and at least the second ToF image can be computed in order to reduce temporal noise. The temporal noise has been reduced in the average ToF image by averaging. At 14, the average ToF image is then lowpass-filtered (for example, with a Gaussian filter) to generate the filtered ToF image at 16.

Since FPPN is frequency dependent, the calibration can be done per used modulation frequency of the ToF camera's light source. That is to say, the calibration process 10 can optionally include selecting 11 a first RF modulation frequency. At 12, one or more first ToF images of the target at the predetermined distance are taken using the first modulation frequency. In case of multiple first ToF images, a first average ToF image can be computed in order to reduce temporal noise. At 14, the first (average) ToF image is lowpass-filtered to generate a first filtered ToF image. At 16, the filtered first ToF image is subtracted from the first ToF image to generate a first FPPN image (for the first modulation frequency). At 17, at least a second modulation frequency is selected. Acts 12, 14, and 16 are then repeated for at least the second modulation frequency. The respective FPPN images can be stored in a computer memory of the ToF camera and then be used as a baseline for calibrating wiggling errors at the respective modulation frequency and/or for correcting ToF images taken with the respective modulation frequency.

Improved results can achieved when the ToF camera is fixed with its optical axis being orthogonal to the (flat) surface of the target, so essentially no movement occurs between the ToF camera and the target during calibration. However it is also possible to achieve adequate compensation by just holding the ToF camera in hand and aiming it at a white sheet of paper, for example. To minimize motion induced artifacts, low integration time and high framerate can be used.

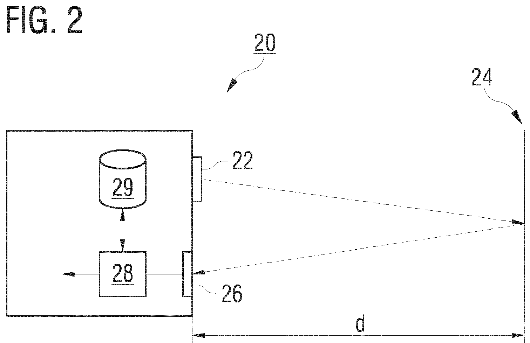

**Fig 2** schematically illustrates a ToF camera 20 according to an embodiment.

The ToF camera 20 comprises an illumination unit 22 configured to emit modulated light towards a flat target 24 at known distance d from the ToF camera. An image sensor 26 is configured to generate and output one or more ToF images of the target 24 to a processor 28. In case of a plurality of subsequent ToF images of the target 24, the processor 28 can be configured to compute an average image of the plurality of ToF images, which is then fed to a digital lowpass-filter (for example, a Gaussian filter) to generate a filtered ToF image. The processor 28 is further configured to subtract the filtered ToF image from the (average) ToF image to generate a FPPN image. The latter can be stored in a memory 29 of the ToF camera and be used for correcting ToF images taken with the ToF camera 20 during normal operation.

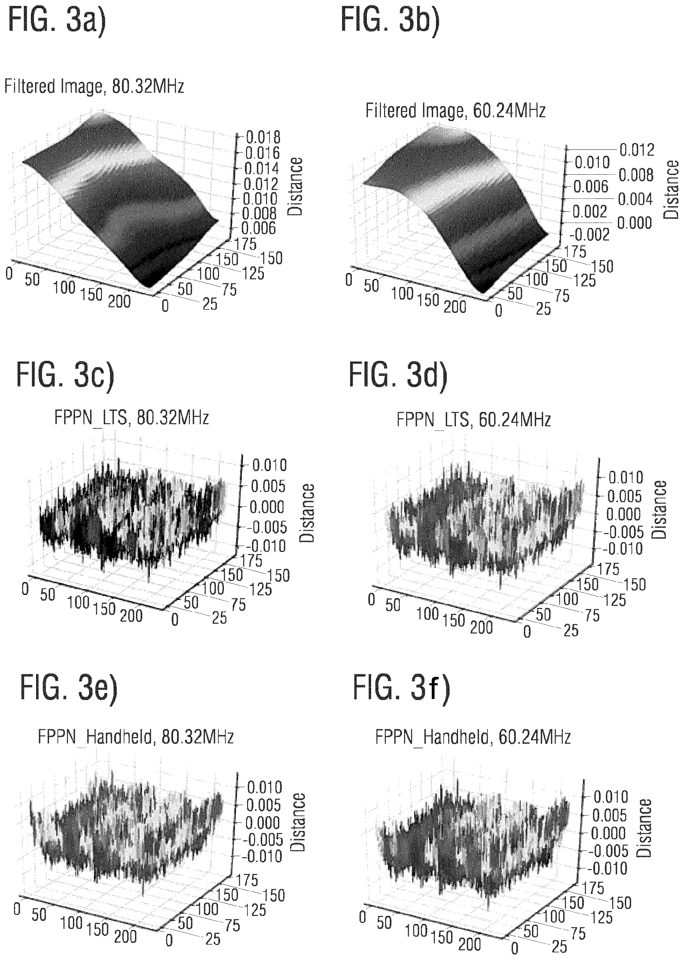

Some examples of measurement results are depicted in **Fig. 3****.**

Fig. 3a shows a lowpass-filtered ToF image obtained using a modulation frequency of 80.32 MHz. Fig. 3b shows a lowpass-filtered ToF image obtained using a modulation frequency of 60.24 MHz. It can be seen that the lowpass-filtered ToF images are slightly different for the different RF modulation frequencies.

Figs. 3c and 3d show respective FPPN images obtained with modulation frequencies of 80.32 MHz and 60.24 MHz. These FPPN images have been obtained with a ToF camera being mechanically fixed during calibration. Figs. 3e and 3f show further examples of FPPN images obtained with modulation frequencies of 80.32 MHz and 60.24 MHz. Here, FPPN images have been obtained with a ToF camera held in the hand during calibration.

To summarize, the proposed solution can use a digital filtering technique in software to separate the two error sources FPPN and wiggling. The concept is independent of the distance and requires no special measurement equipment. The proposed concept is based on the assumption that FPPN is in nature a high frequency component and the wiggling is much lower frequency phenomenon. This allows separating them from a single measurement using a digital low pass filter. Knowing the FPPN allows to compensate the wiggling by employing different techniques like a distance sweep on a Linear Translation Stage or using the simulated distance with an optical fiber box.

The aspects and features mentioned and described together with one or more of the previously detailed examples and figures, may as well be combined with one or more of the other examples in order to replace a like feature of the other example or in order to additionally introduce the feature to the other example.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. Method (10) for calibrating a Time of Flight, ToF, camera (20), the method comprising:
taking (12) at least one ToF image of a target (24) at one or more predetermined distances from the ToF camera;
lowpass-filtering (14) the at least one ToF image to generate a filtered ToF image; and
subtracting (16) the filtered ToF image from the ToF image to generate a fixed pattern phase noise, FPPN, image.

2. The method (10) of claim 1, further comprising
correcting (18) ToF images of the ToF camera using the FPPN image.

3. The method (10) of any one of the previous claims, comprising taking a first ToF image of the target at the predetermined distance;
taking at least a second ToF image of the target at the predetermined distance; determining an average of the first and the second ToF image to generate an average ToF image; and
lowpass-filtering (14) the average ToF image to generate the filtered ToF image.

4. The method (10) of any one of the previous claims, wherein the at least one ToF image is filtered with a digital lowpass filter having a kernel size equal to a size of the at least one ToF image.

5. The method (10) of any one of the previous claims, wherein the at least one ToF image is filtered with a digital Gaussian filter.

6. The method (10) of any one of the previous claims, comprising selecting (11) a first modulation frequency;
taking (12), using the first modulation frequency, at least one first ToF image of the target at the predetermined distance;
lowpass-filtering (14) the at least one first ToF image to generate a first filtered ToF image;
subtracting (16) the filtered first ToF image from the first ToF image to generate a first FPPN image;
selecting (17) a second modulation frequency;
taking (11), using the second modulation frequency, at least one second ToF image of the target at the predetermined distance;
lowpass filtering (14) the at least one second ToF image to generate a second filtered ToF image;
subtracting (16) the second filtered ToF image from the second ToF image to generate a second FPPN image.

7. The method (10) of claim 6, further comprising
correcting (18) ToF images taken with the first modulation frequency using the first FPPN image; and
correcting (18) ToF images taken with the second modulation frequency using the second FPPN image.

8. The method (10) of any one of the previous claims, further comprising fixing the ToF camera (20) with its optical axis being orthogonal to a surface of the target (24).

9. Computer program for performing the method of any one of the previous claims, when the computer program is executed on a programmable hardware device.

10. A ToF camera (20), comprising:
a lowpass-filter configured to filter a ToF image of a target (24) at predetermined distance from the ToF camera to generate a filtered ToF image;
a processor (28) configured to
subtract the filtered ToF image from the ToF image to generate a FPPN image; and
correct ToF images taken with the ToF camera (20) using the FPPN image.

11. The ToF camera (20) of claim 10, wherein the processor (28) is configured to determine an average of a first and a second ToF image of the target to generate an average ToF image, and wherein the lowpass-filter is configured to filter the average ToF image to generate the filtered ToF image.

12. The ToF camera of claim 10 or 11, wherein the lowpass-filter is a digital lowpass-filter having a kernel size corresponding to a pixel resolution of the ToF image.
